# EUROPÄISCHE PATENTANMELDUNG

(11) **EP 0 727 140 A1**
(43) Veröffentlichungstag der Anmeldung: **21.08.1996**
(21) Anmeldenummer: 95102157.5
(22) Anmeldetag: 16.02.1995
(51) Int. Cl.: A01K 13/00

(54) **Sehnenschoner für Pferde**

(71) Anmelder: GEORG KIEFFER Sattlerwarenfabrik GmbH, D-81929 München (DE)
(72) Erfinder: Merker, Curt, D-81929 München (DE); Conzet, Hjalmar, D-81927 München (DE)
(74) Vertreter: Bauer, Robert, Dipl.-Ing.

(57) **Zusammenfassung**

Ein Sehnenschoner für Pferde als Gamasche oder Streifkappe und im wesentlichen bestehend aus einer um das Pferdebein herum schließbaren Matte (6) und einer außenseitig darauf aufgesetzten, profilierten Schutzkappe (8) aus steiferem flexiblem Material kennzeichnet sich dadurch, daß die Matte zumindest an ihrem unteren und einem seitlichen Rand eine abgerundete Einfassung (12) besitzt und daß die Schutzkappe mit einem weichelastischen Polstermaterial unterlegt ist. Dadurch wird bei einwandfreier, seinem Gebrauchszweck entsprechender Funktion des Sehnenschoners jedes Scheuern am Pferdebein ausgeschlossen.

## Beschreibung

Die Erfindung betrifft einen Sehnenschoner für Pferde gemäß Gattungsbegriff des Anspruchs 1.

Derartige Sehnenschoner in Gestalt von Gamaschen oder Streifkappen sind bekannt und gebräuchlich, um den empfindlichen Fesselkopf der Pferdebeine - vorderen wie hinteren - vor Schlägen zu schützen. Dabei hat man jedoch beobachtet, daß der Sehnenschoner mit seinen Rändern am Pferdebein und im übrigen auch zuweilen gerade an dem zu schützenden Fesselkopf scheuert, wodurch sich u.U. schwer heilende Wundstellen ergeben.

Der Erfindung liegt die Aufgabe zugrunde, hier Abhilfe zu schaffen, d.h. einen Sehnenschoner so auszubilden, daß er bei voller Wirksamkeit entsprechend seinem Gebrauchszweck keinerlei Schürfungen am Pferdebein hervorrufen kann.

Diese Aufgabe ist maßgeblich durch einen Sehnenschoner mit den Merkmalen des Anspruchs 1 gelöst. Die Unteransprüche geben darüber hinaus vorteilhafte Ausgestaltungsmöglichkeiten an.

Durch die Einfassung des Randes der das Pferdebein umschließenden Matte und die Auspolsterung der Schutzkappe werden die bislang beobachteten Schürfungen am Pferdebein zuverlässig vermieden. Dabei bleibt die Wirksamkeit eines einschlägigen Sehnenschoners voll erhalten.

Nachfolgend wird ein bevorzugtes Ausführungsbeispiel anhand der Zeichnungen samt einer Variante genauer beschrieben. Dabei zeigt
Fig. 1 eine Draufsicht auf den betreffenden Sehnenschoner in geöffnetem Zustand von außen, wobei eine Hälfte der Schutzkappe samt einem Teilbereich einer Kunstlederabdeckung der die Schutzkappe tragenden Matte weggebrochen erscheint, und

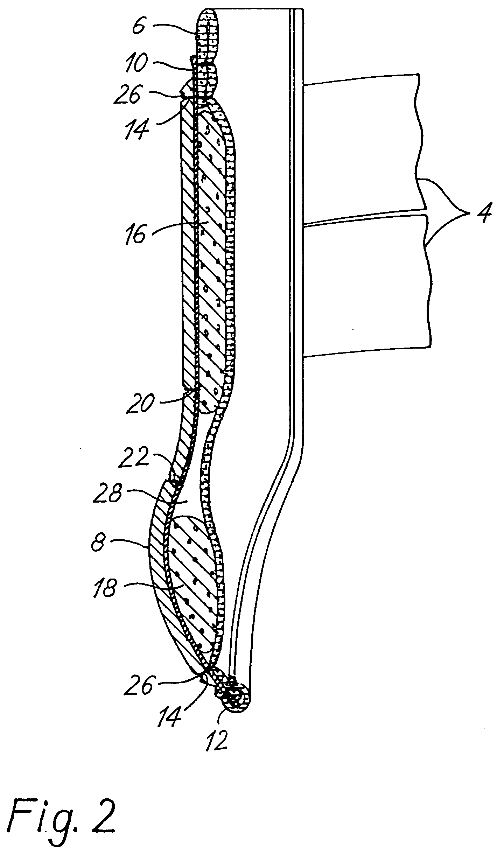

Fig. 2 einen etwas vergrößerten Querschnitt durch den gleichen Sehenschoner entlang der Längsmittellinie II-II der Schutzkappe gemäß Fig. 1.

Der gezeigte Sehnenschoner besteht im wesentlichen aus einer mittels Klett- und Flauschbändern 2 bzw. 4 um das Pferdebein herum schließbaren flexiblen Matte 6 mit einer außenseitig darauf aufgesetzten, im wesentlichen löffelförmigen Schutzkappe aus einem steiferen flexiblen Material. Die Matte 6 kann aus einem Schaumkunststoff mit geschlossener Oberfläche oder einer gefütterten Kunststoffolie bestehen und mit einem Prägeprofil versehen sein. Darüber hinaus kann sie, wie gezeigt, auf einem wesentlichen Teil ihrer Außenfläche eine Leder- oder Kunstlederabdeckung 10 tragen. Samt der letzteren ist die hatte 6 an ihren im Gebrauch seitlichen bzw. untenliegenden Rändern mit einer abgerundeten Einfassung 12 versehen, wie sie in an sich bekannter Weise durch einen beiderseits eingefalteten, um den jeweiligen Rand herumgelegten und sodann von einer Seite zur anderen durchgenähten Leder- oder Kunstlederstreifen entsteht.

Die Schutzkappe 8 ist entlang ihrem Rand im Bereich der Leder- bzw. Kunstlederabdeckung 10 auf die hatte 6 aufgenäht, wobei die betreffende Naht 14, welche die hatte 6 bis zu deren Innenseite durchsetzt, zwei unter der Abdeckung 10 eingelegte weichelastische Schaumstoff-Polsterteile 16 und 18 umgibt. Während sich das Polsterteil 16 im Stielbereich der löffelförmigen Schutzkappe 8 befindet, nimmt das Polsterteil 18 den unteren Laffenbereich ein.

Des weiteren ist die Schutzkappe 8 mittels bogenförmiger Nähte 20 und 22, die als Ziernähte in Erscheinung treten, an die Abdeckung 10 angenäht. Dabei sind die Innenenden der Flauschbänder 4 wie auch eines die beiden Klettbänder 2 tragenden Gurtbandes 24 zwischen Schutzkappe 8 und Abdeckung 10 eingenäht. Zur Führung und gefälligen Aufnahme der Nähte 14, 20 und 22 weist die Schutzkappe 8 außenseitig entsprechende eingeprägte Rillen, wie z.B. 26, auf.

Es versteht sich, daß zusätzlich zu den Nähten auch Klebstoff Anwendung finden kann.

Durch ihre Anordnung zwischen hatte 6 und Abdeckung 10 machen sich die Polsterteile 16 und 18 unterhalb der Schutzkappe 8 besonders weich und anschmiegsam bemerkbar. Gewünschtenfalls können die Polsterteile 16 und 18 jedoch auch zwischen Schutzkappe 8 und Abdeckung 10 eingelegt sein, oder es kann die Abdeckung 10 zur paßgenauen Fixierung der Polsterteile unter der Schutzkappe 8 entsprechend ausgeschnitten sein. Die Aussparung 28 zwischen den beiden Polsterteilen im oberen Löffellaffenbereich bewirkt eine besonders sichere, formschlüssige Fixierung des Sehnenschoners am Fesselkopf des Pferdes, so daß auch von daher ein jedes Scheuern ausgeschlossen ist.

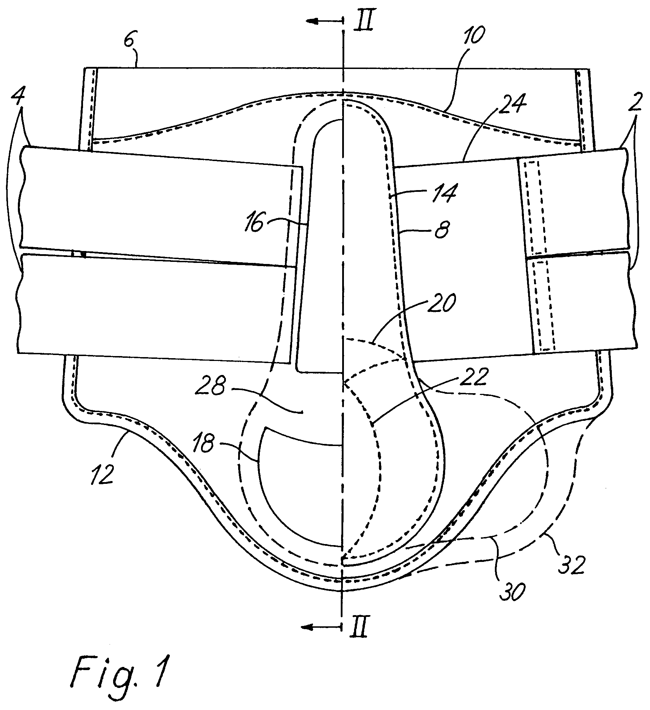

In Fig. 1 ist in der rechten Hälfte gestrichelt noch eine Variante gezeigt. Dabei hat die Schutzkappe im Laffenbereich nach derjenigen Seite hin, die beim Gebrauch des Sehnenschoners rückwärtig zu liegen kommt, einen gleichfalls konkaven Ansatz 30, der auf einer entsprechenden Ausbuchtung 32 der hatte 6 samt Abdeckung 10 Aufnahme findet.

In weiterer Abweichung von der zunächst beschriebenen Ausführungsform kann das im Stielbereich der Schutzkappe 8 befindliche Polsterteil 16 u.U. entfallen, wobei dennoch der Fesselkopf bestmöglich geschützt ist.

## Patentansprüche

1. Sehnenschoner für Pferde als Gamasche oder Streifkappe und im wesentliche bestehend aus einer um das Pferdebein herum schließbaren Matte (6) und einer außenseitig darauf aufgesetzten, profilierten Schutzkappe (8) aus steiferem flexiblem Material, dadurch **gekennzeichnet**, daß die Matte (6) zumindest an ihrem unteren und einem seitlichen Rand eine abgerundete Einfassung (12) besitzt und daß die Schutzkappe (8) mit einem weichelastischen Polstermaterial unterlegt ist.

2. Sehnenschoner nach Anspruch 1, dadurch **gekennzeichnet**, daß das Polstermaterial zwischen Matte (6) und Schutzkappe (8) eingeschlossen ist.

3. Sehnenschoner nach Anspruch 1 oder 2, dadurch **gekennzeichnet**, daß das Polstermaterial aus Schaumstoff besteht.

4. Sehnenschoner nach einem der vorhergehenden Ansprüche, dadurch **gekennzeichnet**, daß die Schutzkappe (8) in an sich bekannter Weise etwa Löffelform besitzt.

5. Sehnenschoner nach Anspruch 4, dadurch **gekennzeichnet**, daß die Schutzkappe (8) im Löffellaffenbereich einen seitlichen Ansatz (30) aufweist.

6. Sehnenschoner nach Anspruch 4 oder 5, dadurch **gekennzeichnet**, daß das Polstermaterial im an den Stielbereich anschließenden Löffellaffenbereich unterbrochen ist oder sich auf den stielbereichfernen Löffellaffenbereich beschränkt.

7. Sehnenschoner nach Anspruch 6, dadurch **gekennzeichnet**, daß das Polstermaterial im Löffellaffenbereich eine etwa mondsichelförmige Gestalt besitzt.

8. Sehnenschoner nach einem der vorhergehenden Ansprüche, dadurch **gekennzeichnet**, daß die Matte (6) außenseitig in an sich bekannter Weise eine Leder- oder Kunstlederabdeckung (10) trägt.

9. Sehnenschoner nach einem der vorhergehenden Ansprüche, dadurch **gekennzeichnet**, daß die Schutzkappe (8) um das Polstermaterial herum mit der Matte (6) vernäht ist.

10. Sehnenschoner nach den Ansprüchen 8 und 9, dadurch **gekennzeichnet**, daß die Schutzkappe (8) zusätzlich lediglich mit der Leder- bzw. Kunstlederabdeckung (10) vernäht ist.

11. Sehnenschoner nach Anspruch 9 oder 10, dadurch **gekennzeichnet**, daß die Schutzkappe (8) die betreffenden Nähte (14, 20, 22) aufnehmende Rillen (26) aufweist.
